# EUROPÄISCHE PATENTANMELDUNG

(11) **EP 1 609 670 A1**
(43) Veröffentlichungstag der Anmeldung: **28.12.2005**
(21) Anmeldenummer: 05011895.9
(22) Anmeldetag: 02.06.2005
(51) Int. Cl.: B60P 1/44

(54) **Hubladebühne**

(30) Priorität: 22.06.2004 DE 102004030075
(71) Anmelder: MBB Liftsystems AG, 27777 Ganderkesee (DE)
(72) Erfinder: Rulfs, Eike, 27804 Berne (DE)
(74) Vertreter: Möller, Friedrich

(57) **Zusammenfassung**

Bei sogenannten faltbaren Hubladebühnen 10 ist es erforderlich, die aus zusammenfaltbaren Ladeplattformteilen (27, 28) gebildete Ladeplattform (13) aus der flachliegenden Ruhestellung manuell hochzuschwenken, um sie in die Gebrauchsstellung zu bringen. Das erfordert von der Bedienungsperson einen erheblichen Kraftaufwand und ist deshalb recht mühselig.

Die Erfindung sieht vor, der Ladeplattförm einen Schwenkarm (31) zuzuordnen, der zumindest vom Kippzylinder (20) eines Hubwerks (14) der Hubladebühne (10) betätigbar ist. Vom Schwenkarm (31) ist die zusammengefaltete Ladeplattform (13) aus der flachliegenden Ruhestellung in eine nahezu senkrechte Stellung hochschwenkbar. Damit wird der kraftaufwendige Teil des Ausfaltens der Ladeplattform (13) automatisiert, so dass bei der erfindungsgemäßen Hubladebühne (10) der kraftraubende Teil des Ausfaltens der Ladeplattform (13) entfällt.

## Beschreibung

Die Erfindung betrifft eine Hubladebühne zur Anordnung im rückwärtigen Bereich eines Fahrzeugs gemäß dem Oberbegriff des Anspruchs 1.

Hubladebühnen dienen dazu, das Be- und Entladen von Fahrzeugen mit insbesondere schweren Gegenständen zu erleichtern. Dazu verfügen die Hubladebühnen über eine vorzugsweise an der Rückseite eines Aufbaus eines Fahrzeugs schwenk-, heb- und senkbar angelenkte Ladeplattform.

Die Erfindung bezieht sich auf eine Hubladebühne, die in ihrem Ruhezustand während der Fahrt des Fahrzeugs, woran die Hubladebühne angebracht ist, unter einen gegenüber der Hinterachse nach hinten vorstehenden rückwärtigen Bereich des Fahrzeugs faltbar ist. Im Fachjargon spricht man von einer unterfaltbaren Hubladebühnen. Vielfach wird dazu die Ladeplattform aus zwei oder gegebenenfalls auch mehr als zwei zusammenklappbaren Teilen gebildet, wodurch die Länge der Ladeplattform in Fahrtrichtung mindestens halbiert wird und die Ladeplattform dadurch in der Ruhestellung weniger Platz unter dem Fahrzeug benötigt.

Bei einer Hubladebühne der angesprochenen Art wird das Ausfalten der Ladeplattform, wenn diese von der Ruhestellung in die Gebrauchsstellung gebracht werden soll, manuell durchgeführt. Dazu muss zunächst die flachliegende Ladeplattform um etwa 90° in eine nahezu senkrechte Stellung hochgeschwenkt werden. Das erfordert selbst bei größtenteils aus Aluminium hergestellten Ladeplattformen einen recht großen Kraftaufwand. Ältere Fahrer oder auch Fahrerinnen sind damit überfordert.

Um das manuelle Ausfalten oder zumindest den große Kraftanstrengungen erforderlichen Teil des Ausfaltvorgangs der Ladeplattform zu erleichtern, sind Hubladebühnen mit zusätzlichen Druckmittelzylindern zum Aufrichten der in der Ruhestellung flachliegenden Ladeplattform bekannt. Diese zusätzlichen Druckmittelzylinder sind kostenintensiv, erhöhen das Gewicht der Hubladebühne und erfordern eine separate Steuerung. Deshalb haben sich unterfaltbare Hubladebühnen, die ein mechanisches Aufrichten der Ladeplattform ermöglichen, in der Praxis nicht durchsetzen können.

Der Erfindung liegt nun die Aufgabe zugrunde, eine Hubladebühne der eingangs genannten Art zu schaffen, die mit einfachen Mitteln mindestens ein automatisches Aufrichten der Ladeplattform ermöglicht.

Eine Hubladebühne zur Lösung dieser Aufgabe weist die Merkmale des Anspruchs 1 auf. Durch das mindestens eine der Ladeplattform zugeordnete Schwenkmittel und den mindestens teilweisen Antrieb des Schwenkmittels durch ein Betätigungsorgan des Hubwerks erübrigt sich der bei bekannten Hubladebühnen zum automatischen Aufrichten der Ladeplattform erforderliche zusätzliche Druckmittelzylinder. Es ist praktisch nur das mindestens eine Schwenkmittel erforderlich, welches durch ein ohnehin notwendiges und vorhandenes Betätigungsorgan des Hubwerks, beispielsweise ein Kippzylinder oder ein Hubzylinder, mindestens teilweise verschwenkbar ist.

Gemäß einer bevorzugten Weiterbildung der Hubladebühne ist vorgesehen, das Verschwenkmittel zusätzlich von einem Parallelogrammlenker des Hubwerks zu betätigen. Ein solcher Parallelogrammlenker ist ohnehin beim Hubwerk erforderlich, so dass auch die vom Parallelogrammlenker erforderliche teilweise Bewegung des Schwenkmittels keinen zusätzlichen baulichen Aufwand erfordert. Das gesamte Hochschwenken der Ladeplattform sowie gegebenenfalls auch das Zurückschwenken derselben in die flachliegende Ruhestellung erfolgt zum einen Teil durch den Parallelogrammlenker und zum anderen Teil durch das Betätigungsorgan der Hubbühne, nämlich entweder den Hubzylinder oder den Kippzylinder.

Zum Überführen der Ladeplattform von der zusammengefalteten Ruhestellung in die ausgefaltete Gebrauchsstellung ist es erforderlich, zunächst die zusammengefaltete Ladeplattform aus der horizontalliegenden Gebrauchsstellung um 90° hochzuschwenken und dann um 90° zurückzuschwenken in die jeweils etwa horizontale oder leicht hierzu nach oben oder unten geneigte Gebrauchsstellung. Besteht die Ladeplattform aus mehreren zusammengefalteten Ladeplattformteilen, wobei es sich üblicherweise um zwei um eine mittige quer zur Fahrtrichtung verlaufende Scharnierachse verbundene Plattformteile handelt, muss ein außen bzw. hinten liegendes Plattformteil zur Überführung in die Betriebsstellung erforderlichenfalls um 180°verschwenkt, nämlich ausgefaltet werden. Die größte Kraftanstrengung erfordert das Hochschwenken der gesamten Ladeplattform, und zwar auch dann, wenn diese aus zwei zusammengeklappten und übereinanderliegenden Plattformteilen besteht. Dieser kraftaufwendige Teil des Überführens der Ladeplattform von der Ruhestellung in die Gebrauchsstellung erfolgt erfindungsgemäß automatisch durch das Verschwenkmittel, was zu einem Teil von dem Parallelogrammlenker und zum anderen Teil von einem Betätigungsorgan des Hubwerks erfolgt. Das weitere Verschwenken der Ladeplattform um 90° von der etwa senkrecht hochgeschwenkten Stellung in die etwa horizontale Gebrauchsstellung kann ohne große Kraftanstrengung manuell oder auch das übliche Verschwenken durch den Kippzylinder erfolgen, und zwar ebenso wie das Ausbreiten des zweiten (hinteren) Ladeplattformteils gegenüber dem sich bereits in der Gebrauchsstellung befindlichen vorderen Ladeplattformteil. Das Umschwenken des hinteren Ladeplattformteils ist auch deshalb mit verhältnismäßig geringem Kraftaufwand möglich, weil das hintere Plattformteil in der Regel leichter ist als das vordere Plattformteil, das wegen der Befestigung am Hubwerk erheblich stabiler ausgebildet sein muss. Es reicht also, wenn erfindungsgemäß zum Ausklappen der Ladeplattform diese aus der Ruhestellung vom Verschwenkmittel mechanisch hochgeklappt wird. Umgekehrt erfolgt das Überführen der Ladeplattform von der Betriebsstellung in die Ruhestellung, wo das kraftaufwendige und auch verletzungsträchtige Zurückschwenken der Ladeplattform nach dem gegebenenfalls zuvor erfolgten Zusammenklappen der Plattformteile mechanisch vom Schwenkmittel erfolgt.

Das Schwenkmittel ist gemäß einer bevorzugten Ausgestaltung der Erfindung als mindestens ein Schwenkarm ausgebildet. Es reicht, wenn die Hubladebühne einen einzigen Schwenkarm aufweist. Mit einem solchen Schwenkarm läst sich die Ladeplattform leicht aufrichten. Dazu ist der Schwenkarm lediglich unter der in der Ruhestellung flachliegenden Ladeplattform anzuordnen. Der Schwenkarm braucht lediglich um einen Schwenkpunkt verkippt zu werden, um die Ladeplattform aufzurichten. Dieses Aufrichten des Schwenkarms kann recht einfach erfolgen. Außerdem lässt sich der Schwenkarm mit geringem Aufwand realisieren. Bei größeren und damit schwereren Hubladebühnen können noch mehrere Schwenkarme vorgesehen sein.

Der Schwenkarm ist auf einfache Weise an einem Ende drehbar am Hubwerk gelagert. Vorzugsweise ist der Schwenkarm drehbar an einer Hubschwinge des Hubwerks angeordnet. Ein gegenüberliegendes freies Ende des Schwenkarms ist zur Anlage unter der sich in der Ruhestellung befindlichen Ladeplattform ausgebildet. Wird der Schwenkarm nun in einer vertikalen Ebene verschwenkt, drückt das freie Ende des Schwenkarms die Ladeplattform hoch, wodurch diese mechanisch aufgerichtet wird. Der Schwenkarm ist in der Länge so bemessen und hierauf der Antrieb des Schwenkarms abgestimmt, dass der Schwenkarm die Ladeplattform bis kurz vor Erreichen einer senkrechten Stellung hochklappt. Dadurch wird sichergestellt, dass im Schwenkarm die Ladeplattform nicht über die Senkrechte hinaus verschwenkt wird, was zu einem unkontrollierten Herunterschwenken der Ladeplattform in die Betriebsstellung führen könnte. Dieses unkontrollierte Verschwenken der Ladeplattform in die endgültige Gebrauchsstellung könnte umherstehende Personen gefährden. Außerdem führt das unkontrollierte freie Herunterkippen der Ladeplattform zu unerwünscht hohen Kräften in den Gelenken zur Verbindung der Ladeplattform mit den Hubschwingen des Hubwerks.

Zwischen den gegenüberliegenden Enden ist der jeweilige Schwenkarm mit mindestens einem Betätigungsorgan des Hubwerks verbunden. Bei einer bevorzugten Ausgestaltung der Erfindung ist der Schwenkarm mit einem der beiden Kippzylinder des Hubwerks verbunden. Es handelt sich dabei um denjenigen Kippzylinder, der der Hubschwinge zugeordnet ist, an der der Schwenkarm mit einem Ende drehbar gelagert ist.

Zwischen den gegenüberliegenden Enden ist der Schwenkarm mit dem Betätigungsorgan, insbesondere dem Kippzylinder, des Hubwerks verbunden. Der Kippzylinder greift dadurch mit Abstand von demjenigen Ende des Schwenkarms an, mit dem er drehbar am Hubwerk, insbesondere der Hubschwinge, gelagert ist. Hierdurch kann auf einfache Weise der Schwenkarm vom Betätigungsorgan des Hubwerks, insbesondere dem Kippzylinder, hoch- und heruntergeschwenkt werden.

Gemäß einer bevorzugten Ausgestaltung der Erfindung ist der Schwenkarm zusätzlich mit dem Parallelogrammlenker des Hubwerks verbunden. Dadurch kann beim Absenken der Ladeplattform und die dadurch bedingte Verschiebung des Parallelogrammlenkers der Schwenkarm bereits anfänglich hochgeschwenkt werden, ohne dass dazu eine Betätigung insbesondere des Kippzylinders erforderlich ist.

Es ist des Weiteren vorgesehen, den Kippzylinder und den Parallelogrammlenker gemeinsam an den Schwenkarm anzukoppeln, und zwar mittels eines Mitnehmerorgans. Vorzugsweise ist das Mitnehmerorgan einem freien Ende einer Kolbenstange des Kippzylinders zugeordnet und gleichzeitig mit einem zu diesem Ende weisenden Ende des Parallelogrammlenkers verbunden. Dadurch ist nur ein einziges Mitnehmerorgan erforderlich, das sowohl vom Parallelogrammlenker als auch vom Kippzylinder betätigbar ist.

Gemäß einer vorteilhaften Ausgestaltung der Hubladebühne ist das Mitnehmerorgan als seitlich gegenüber dem Parallelogrammlenker und dem Ende der Kolbenstange des Kippzylinders abstehender Bolzen ausgebildet. Dieser Bolzen ist längsverschieblich in einem Langloch im Schwenkarm angeordnet. Dieses Langloch ist von den gegenüberliegenden Enden des Schwenkarms beabstandet. Dadurch kann der Bolzen im Langloch entlanggleiten, wenn der Schwenkarm aufgerichtet oder abgesenkt wird. Das Mitnehmerorgan, insbesondere der Bolzen, ist auf diese Weise längsverschieblich im Schwenkarm geführt, wobei das Langloch die Lageveränderung des Schwenkarms gegenüber dem Mitnehmerorgan, insbesondere Bolzen, ausgleicht, wenn der Schwenkarm durch eine vom Parallelogrammlenker und/oder dem Kippzylinder hervorgerufene Bewegung längs der Hubschwinge sich verschiebt und dadurch eine Schwenkbewegung des Schwenkarms ausübt.

Ein bevorzugtes Ausführungsbeispiel der erfindungsgemäßen Hubladebühne wird nachfolgend anhand der Zeichnung näher erläutert. In dieser zeigen:
- Fig. 1: eine Seitenansicht eines Teils der unter einem rückwärtigen Bereich eines teilweise dargestellten Fahrzeugs angeordneten Hubladebühne in der Ruhestellung,
- Fig. 2: die Hubladebühne der Fig. 1 im anfänglich ausgefalteten Zustand,
- Fig. 3: die Hubladebühne der Fig. 1 und 2 bei maximal automatisch hochgeschwenkter und noch zusammengefalteter Ladeplattform,
- Fig. 4: die Hubladebühne in einer Ansicht gemäß der Fig. 1 bis 3 in der Gebrauchsstellung bei vollständig ausgefalteter Ladeplattform, und
- Fig. 5: eine Draufsicht auf eine Seite des Hubwerks der Hubladebühne nach den Fig. 1 bis 4.

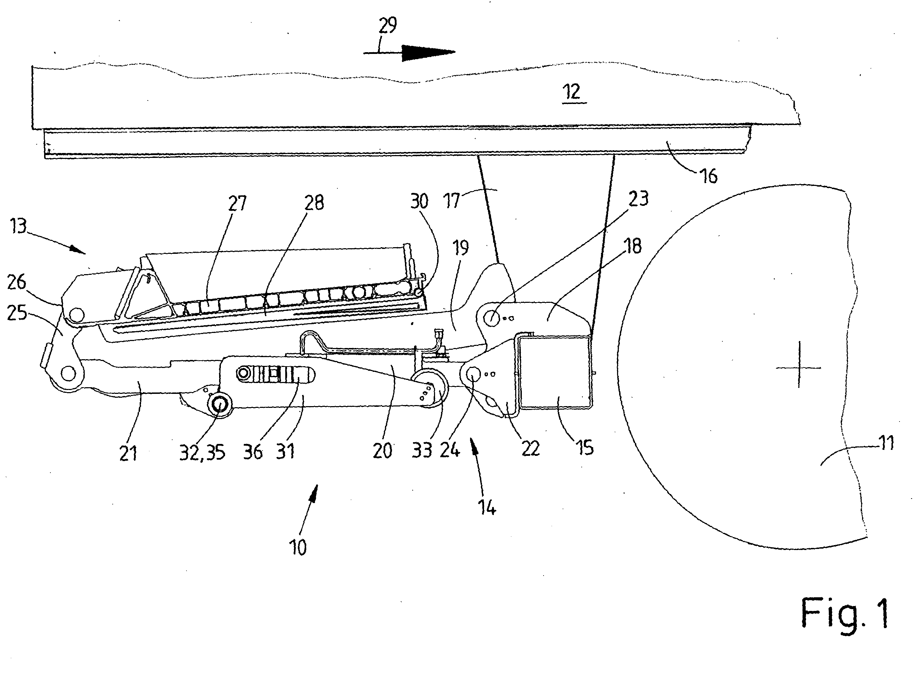

Bei der in den Figuren gezeigten Hubladebühne 10 handelt es sich um eine sogenannte unterfaltbare Hubladebühne 10. Die Hubladebühne 10 ist in einem rückwärtigen Bereich eines teilweise dargestellten Fahrzeugs angeordnet. Dabei befindet sich die Hubladebühne 10 in einem gegenüber den Hinterrädern 11 nach hinten überstehenden Bereich des Aufbaus 12 des Fahrzeugs. Bei Nichtgebrauch der Hubladebühne 10 ist diese eingefaltet, so dass sie sich vollständig unter dem rückwärtigen Teil des Aufbaus 12 des Fahrzeugs befindet (Fig. 1). Diese zusammengefaltete und verstaute Position der Hubladebührie 10 entspricht somit ihrer Ruhestellung.

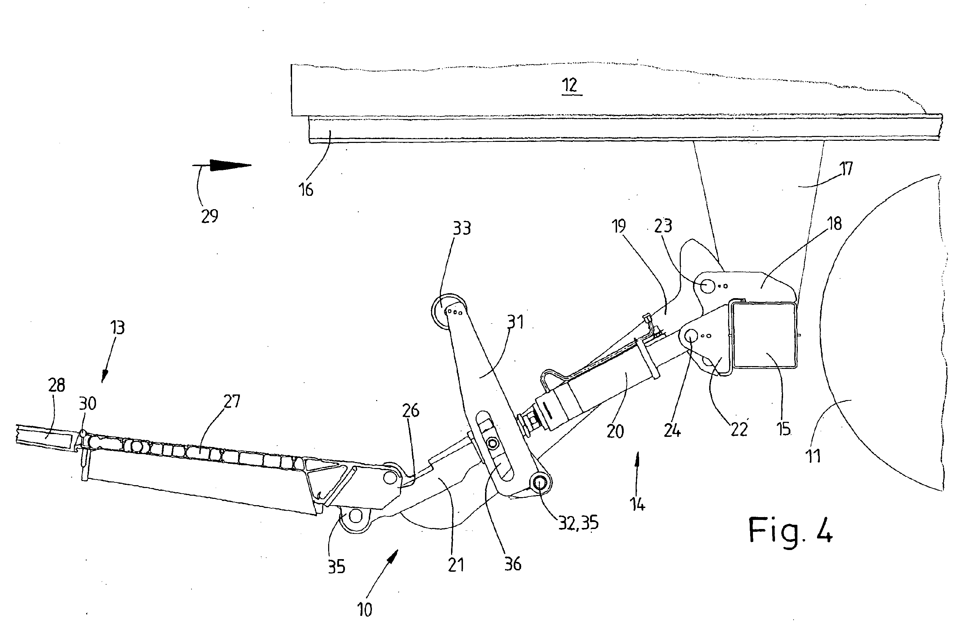

Die Hubladebühne 10 wird im Wesentlichen gebildet aus einer Ladeplattform 13 und einem Hubwerk 14. Das Hubwerk 14 verfügt über ein quer zur Fahrtrichtung sich hinter den Hinterrädern 11 erstreckendes Tragrohr 15, das im gezeigten Ausführungsbeispiel als ein Vierkantrohr ausgebildet ist. Das Tragrohr 15 ist über konsolenartige Tragarme 17 mit dem Chassis des Fahrzeugs, nämlich den Aufbau 12 tragende Fahrgestellträger 16, verbunden. Das Hubwerk 14 verfügt über zwei gegenüberliegenden Seiten des Fahrzeugs zugeordnete Hubschwingen 19. Die Hubschwingen 19 sind im Wesentlichen gleich ausgebildet. Die Hubschwingen 19 sind in einer vertikalen Ebene auf- und abbewegbar, nämlich verschwenkbar. Dazu sind die Hubschwingen 17 mit ihren zu den Hinterrädern 11 weisenden Enden schwenkbar in Lagerböcken 18 am Tragrohr 15 gelagert. An den gegenüberliegenden Enden der Hubschwingen 19 ist ebenfalls schwenkbar die Ladeplattform 13 angelenkt. Jeder Hubschwinge 19 ist ein Hubzylinder und ein Kippzylinder zugeordnet. Außerdem ist jede Hubschwinge 19 mit einem Parallelogrammlenker 21 versehen. Ein zu den Hinterrädern 11 weisendes Ende jedes Parallelogrammlenkers 21 ist wiederum schwenkbar mit einem Lagerbock 22 am Tragrohr 15 angelenkt. Dabei sind parallele Drehachsen 23 und 24 der Hubschwinge 19 am Lagerbock 18 und des Parallelogrammlenkers 21 am Lagerbock 22 voneinander beabstandet, vorzugsweise annähernd übereinanderliegend angeordnet. Das gegenüberliegende Ende jedes Parallelogrammlenkers 21 ist gelenkig mit einem kurzen Kipparm 25 verbunden, der in bekannter Weise mit einer zum Hubwerk 14 weisenden quer zur Fahrtrichtung 29 verlaufenden Hinterkante 26 der Ladeplattform 13 verbunden ist. Es bilden so auf jeder Seite des Hubwerks 10 der kurze Kipparm 25, der Parallelogrammlenker 21, die Hubschwinge 19 und der Abstand der Drehachsen 23 und 24 ein Parallelogramm. Dieses übliche Parallelogramm dient dazu, beim Absenken und Anheben der Ladeplattform 13 durch ein Verschwenken der Hubschwinge 19 durch die Hubzylinder die Neigung der Ladeplattform 13 annähernd konstant zu halten. Das gezielte Verändern der Neigung der Ladeplattform 13, insbesondere das Überführen der Ladeplattform 13 in die etwa horizontal ausgerichtete Gebrauchsstellung (Fig. 4), erfolgt durch die Kippzylinder 20.

Die Ladeplattform 13 ist im gezeigten Ausführungsbeispiel zweiteilig ausgebildet. Dadurch besteht die Ladeplattform 13 aus einem mit dem Hubwerk 14, nämlich den Hubschwingen 19 verbundenes hinteres Ladeplattformteil 27 und ein vorderes Ladeplattformteil 28. Beide Ladeplattformteile 27 und 28 sind mittels einer quer zur Fahrtrichtung 29 sich erstreckenden Scharnierachse 30 schwenkbar miteinander verbunden. Das vordere Ladeplattformteil 28 ist gegenüber dem mit dem Hubwerk 14 verbundenen hinteren Ladeplattformteil 27 frei verschwenkbar, und zwar um etwa 180°. In der in der Fig. 1 gezeigten Ruhestellung ist das vordere Ladeplattformteil 28 unter das hintere Ladeplattformteil 27 geschwenkt. So ist die Länge der Ladeplattform 13 auf etwa die Hälfte reduziert. Dadurch lässt sich die Hubladebühne 10 mit der eingefalteten Ladeplattform 13 unter dem gegenüber den Hinterrädern 11 nach hinten überstehenden Bereich des Fahrgestellträgers 16 und des Aufbaus 12 des Fahrzeugs verstauen, wenn die Hubladebühne 10 sich in der Ruhestellung befindet.

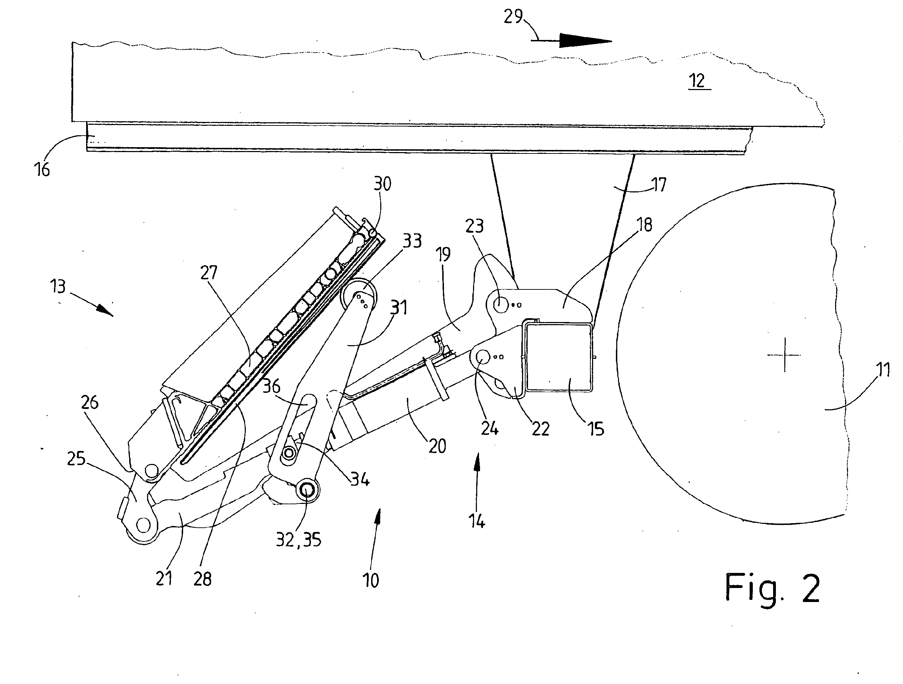

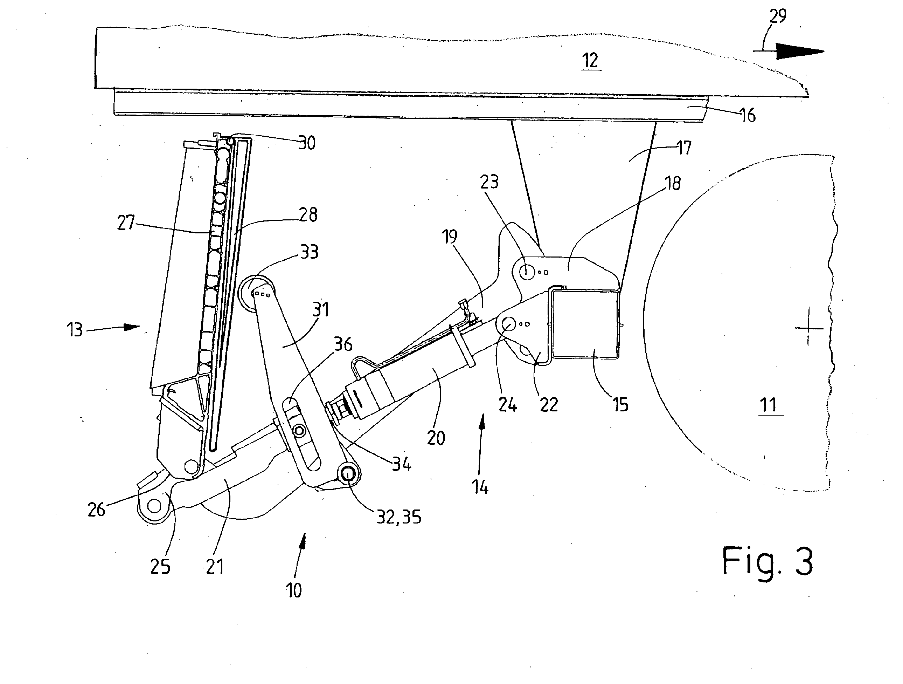

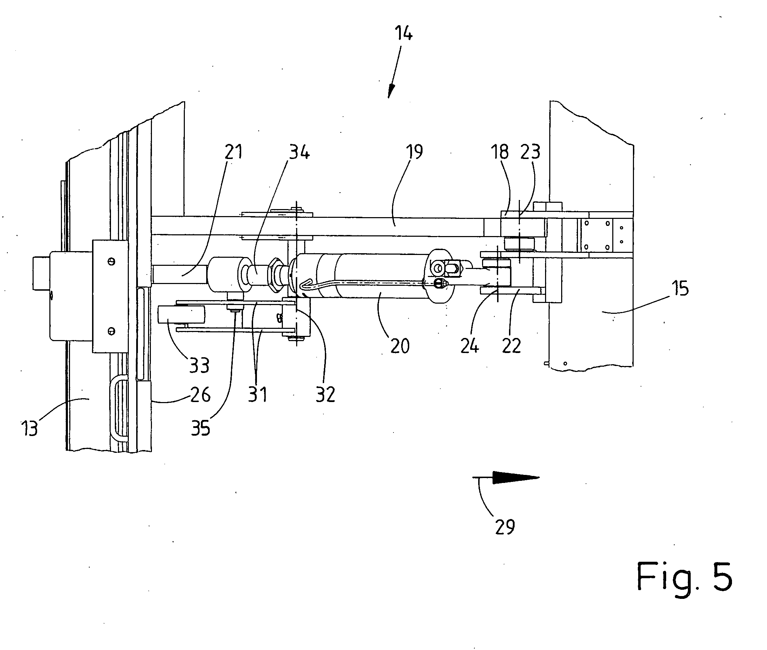

Erfindungsgemäß ist die Hubladebühne 10 mit einem Schwenkmittel versehen. Beim hier gezeigten Ausführungsbeispiel ist das Schwenkmittel gebildet durch einen einzigen Schwenkarm 31. Der Schwenkarm 31 ist nach Art eines einarmigen Hebels in einer vertikalen Ebene verschwenkbar um eine horizontale Drehachse 32, die zwischen den gegenüberliegenden Enden einer der beiden Hubschwingen 19 sich befindet, der der Schwenkarm 31 zugeordnet ist. Im gezeigten Ausführungsbeispiel ist der Abstand der Drehachse 32 zum an der Ladeplattform 13 angelenkten Ende der Hubschwinge 19 kleiner als der Abstand zum Ende der Hubschwinge 19, das mit der Drehachse 23 am Tragrohr 15 gelagert ist. Über die Drehachse 32 ist das untere Ende des Schwenkarms 31 schwenkbar mit der Hubschwinge 19 auf einer Seite der Hubladebühne 10 verbunden (Fig. 5). Ein der Drehachse 32 gegenüberliegendes freies Ende des Schwenkarms 31 ist der Unterseite des unter dem hinteren Ladeplattformteil 27 liegenden Ladeplattformteils 28 zugeordnet. Im gezeigten Ausführungsbeispiel weist das freie Ende des Schwenkarms 31 eine frei drehbare Rolle 33 auf, die zur Anlage unter dem eingeklappten Ladeplattformteil 28 dient, wenn der Schwenkarm 31 die zusammengeklappten Ladeplattformteile 27 und 28 der Ladeplattform 13 aus der Ruhestellung hochschwenkt (Fig. 2 und 3).

Der Schwenkarm 31 ist erfindungsgemäß von einem Betätigungsorgan zum Heben, Senken bzw. Verkippen der Ladeplattform 13 verschwenkbar. Im gezeigten Ausführungsbeispiel steht der Schwenkarm 31 getrieblich mit einem Kippzylinder 20 des Hubwerks 14 und dem dazugehörenden Parallelogrammlenker 21 in Verbindung. Dadurch ist der Schwenkarm 31 durch den Parallelogrammlenker 21 und/oder den Kippzylinder 20 verschwenkbar. Diese getriebliche Kopplung des Schwenkarms 31 mit dem Antrieb des Hubwerks 10, nämlich dem Kippzylinder 20 und dem Parallelogrammlenker 21, erfolgt über ein Mitnehmerorganen, das längsverschieblich an den Schwenkarm 31 angelenkt ist. Gebildet wird das Mitnehmerorgan aus einem am freien Ende einer Kolbenstange 34 des Kippzylinders 20 angeordneten Bolzen 35. Der Bolzen 35 erstreckt sich nach Art eines Tragarms horizontalgerichtet quer zur Fahrtrichtung 29 (Fig. 5). Der Bolzen 35 ist so bemessen, dass er in ein Langloch 36 im Schwenkarm 31 eingreift. Dadurch ist der Bolzen 35 im Langloch 36 in Längsrichtung des Schwenkarms 31 relativ beweglich.

Nachfolgend wird das Verfahren zum Ausfalten der zuvor beschriebenen Hubladebühne 10, insbesondere unter Zuhilfenahme des Schwenkarms 31, näher beschrieben:

Bei der in der Fig. 1 gezeigten Ruhestellung der Hubladebühne 10 sind die Ladeplattformteile 27 und 28 der Ladeplattform 13 zusammengeklappt. Dabei liegt das vordere Ladeplattformteil 28 unter dem hinteren Ladeplattformteil 27, so dass die Ladeplattform 13 in Fahrtrichtung 29 gesehen nur noch über etwa die halbe Länge verfügt. In der Ruhestellung ist die zusammengeklappte Ladeplattform 13 in Fahrtrichtung 29 nach vorn geschwenkt, so dass die Ladeplattformteile 27 und 28 parallel zueinander verlaufen, und zwar etwa horizontalgerichtet. Das Hubwerk 14 ist hierbei so weit wie möglich hochgefahren, so dass sich die Hubladebühne 10 in der Ruhestellung hinter den Hinterreifen 11 befindet, und zwar unter dem gegenüber den Hinterreifen 11 nach hinten überstehenden Bereich des Aufbaus 12 und der Fahrgestellträger 16 des Chassis des Fahrzeugs (Fig. 1).

Zum Ausfalten der Ladeplattform 13 in die Betriebsstellung wird zunächst das Hubwerk 11 mit der noch zusammengefalteten Ladeplattform 13 abgesenkt. Bei diesem Absenkvorgang führt der Parallelogrammlenker 21 zur Hubschwinge 19 eine solche Relativbewegung aus, dass dabei ohne Betätigung des Kippzylinders 20 der Schwenkarm 31 durch Verschwenken entgegen dem Uhrzeigersinn (bezogen auf die Fig. 2) teilweise hochgefahren wird, indem der in das Langloch 36 des Schwenkarms 31 eingreifende Bolzen 35 vom Parallelogrammlenker 21 gegen die Fahrtrichtung 29 zurückbewegt wird. Durch das anfängliche nur vom Parallelogrammlenker 21 erfolgende Hochschwenken des Schwenkarms 31 wird die noch zusammengeklappte Ladeplattform 13 zum Teil aus der flachliegenden Ruhestellung hochgeschwenkt (Fig. 2). Der Schwenkarm 31 wird vom Parallelogrammlenker 21 so lange hochgeschwenkt, bis durch das Absenken des Hubwerks 14 das die Ladeplattform 13 tragende Ende jeder Hubschwinge 19 auf dem Boden anliegt.

Nach dem Absenken des Hubwerks 14 (Fig. 2) werden die Kippzylinder 20 ausgefahren, wodurch der Schwenkarm 31 vom ihm zugeordneten Kippzylinder 20 weiter gegen den Uhrzeigersinn um die Drehachse 32 am Tragarm 17 weiterverschwenkt wird. Dadurch kommt es zu einem weiteren Aufrichten der noch zusammengefalteten Ladeplattform 13, und zwar so weit, bis diese sich kurz vor einer senkrechten Stellung befindet, diese aber noch nicht erreicht (Fig. 3). Dadurch wird verhindert, dass die noch eingefaltete Ladeplattform 13 nicht unkontrolliert über die Senkrechte hinaus herunterschwenken kann.

Nachdem vom Schwenkarm 31 die noch eingefaltete Ladeplattform 13 bis kurz vor die Senkrechte aufgerichtet ist, wird von Hand die noch eingefaltete Ladeplattform 13 über die Senkrechte hinaus um weitere etwa 90° nach hinten geschwenkt. Dieses kann manuell mit geringem Kraftaufwand erfolgen, weil nur die nahezu senkrecht aufgerichtete Ladeplattform 13 über den senkrechten Totpunkt hinweg bewegt werden muss und dann durch das Eigengewicht nach hinten schwenkt. Dabei muss die noch eingeklappte Ladeplattform 13 lediglich gegen zu rasches Nachuntenschwenken gehalten werden. Alternativ kann das endgültige Nachhintenschwenken der Ladeplattform 13 mechanisch durch den Kippzylinder 20 erfolgen. In diesem Fall muss die Ladeplattform 13 nur über den oberen Totpunkt (über die senkrechte Stellung hinaus) bewegt werden. Nach diesem weiteren Verschwenken hat das vordere Ladeplattformteil 28 der Ladeplattform 13 die Gebrauchsstellung erreicht. Es muss nur noch manuell das leichtere, zweite Ladeplattformteil 28 um 180° gegenüber dem Hubwerk 14 befestigten hinteren Ladeplattformteil 27 um die Scharnierachse 30 ausgeschwenkt werden, wodurch die Ladeplattform 13 ihre endgültige Gebrauchsstellung erreicht hat (Fig. 4).

Eine wesentliche Weiterbildung der Erfindung besteht in einer Automatiksteuerung für das automatische Aufrichten der zusammengeklappten Ladeplattform 13. Demnach werden die in den Fig. 1 bis 3 gezeigten Ausfaltvorgänge der Ladeplattform 13 automatisch gesteuert durchgeführt. Dazu weist die Steuerung neben den üblichen Schaltern zum Heben und Senken der Ladeplattform 13 einerseits und zum Verschwenken der Ladeplattform 13 andererseits einen Automatikschalter auf. Dieser zum Ausfalten dienende Automatikschalter bleibt während des gesamten Ausfaltvorgangs (Fig. 1 bis 3) aktiviert. Bei Betätigung des Automatikschalters wird zunächst das Hubwerk 14 mit der noch eingeklappten Ladeplattform 13 abgesenkt, bis das untere Ende des Hubwerks 14 den Boden erreicht hat (Fig. 2). Dabei wird vom Schwenkarm 31 (betätigt durch den Parallelogrammlenker 21) die noch eingeklappte Ladeplattform 13 anfänglich hochgeschwenkt (Fig. 2). Bei weiterhin gehaltenem Automatikschalter fahren nun die Kippzylinder 20 aus, wobei vom Schwenkarm 31 die noch eingeklappte Ladeplattform 13 weiter aufgerichtet wird, und zwar bis kurz vor Erreichen einer senkrechten Position (Fig. 3).

Durch geeignete Sensoren, beispielsweise Neigungssensoren an einer Hubschwinge 19 des Hubwerks 14, werden von der Steuerung automatisch bei auf den Boden abgesenkter Hubladebühne 10 die Kippzylinder 20 betätigt. Weitere Sensoren stoppen das Ausfahren der Kippzylinder 20 kurz vor dem Erreichen einer senkrechten Stellung der noch eingeklappten Ladeplattform 13 (Fig. 3). Nunmehr ist der kraftaufwendige Teil des Ausfaltens der Ladeplattform 13 beendet. Der Automatikschalter kann losgelassen werden. Es erfolgt anschließend manuell nur noch das Herüberschwenken der noch eingeklappten Ladeplattform 13 über den senkrechten Totpunkt. Anschließend wird ebenfalls manuell das leichte vordere Ladeplattformteil 28, das noch auf dem hinteren Ladeplattformteil 27 liegt, um 180° ausgeschwenkt, wodurch die Ladeplattform 13 ausgefaltet wird, indem die Ladeplattformteile 27 und 28 hintereinander liegen und ihre Oberseiten sich im Wesentlichen in einer gleichen Ebene befinden (Fig. 4). Damit ist die endgültige Gebrauchsstellung der Hubladebühne 10, insbesondere der Ladeplattform 13, erreicht.

Das Einfalten der Ladeplattform 13 in die Ruhestellung erfolgt analog zum zuvor beschriebenen Ausfaltvorgang, lediglich in umgekehrter Reihenfolge. Dabei wird jedoch - wie an sich üblich - von den Kippzylindern 20 die zuvor zusammengeklappte Ladeplattform 13 in eine nahezu senkrechte Stellung hochgeschwenkt. Der Schwenkarm 31 übernimmt anschließend nur das kontrollierte Zurückschwenken, nämlich das Flachlegen, der zusammengefalteten Ladeplattform.

Die Erfindung wurde zuvor anhand einer Hubladebühne 10 mit einer einfaltbaren Ladeplattform 13 beschrieben. Die Erfindung eignet sich aber auch für sogenannte unterziehbare Hubladebühnen. Hierbei ist die gesamte Hubladebühne mit dem Hubwerk, einschließlich dem Tragrohr, und der Ladeplattform an Führungsschienen horizontal durch Unterziehzylinder verfahrbar. Diese unterziehbare Hubladebühne ist für Fahrzeuge mit beengten Platzverhältnissen im Heckbereich vorgesehen. Bei der unterziehbaren Hubladebühne erfolgt aus der Ruhestellung heraus zunächst eine Horizontalverschiebung der gesamten Hubladebühne mit zusammengefalteter Ladeplattform gegen die Fahrtrichtung nach hinten. Anschließend erfolgt wie bei zuvor beschriebenen Hubladebühne das mindestens anfänglich automatische Hochschwenken bzw. Ausfalten der Ladeplattform 13, und zwar ebenfalls mit einem Schwenkarm 31 entweder nur vom Kippzylinder 20 oder (wie beim zuvor beschriebenen Ausführungsbeispiel) vom Kippzylinder 20 und vom Parallelogrammlenker.

### Bezugszeichenliste:

- 10: Hubladebühne
- 11: Hinterrad
- 12: Aufbau
- 13: Ladeplattform
- 14: Hubwerk
- 15: Tragrohr
- 16: Fahrgestellträger
- 17: Tragarm
- 18: Lagerbock
- 19: Hubschwinge
- 20: Kippzylinder
- 21: Parallelogrammlenker
- 22: Lagerbock
- 23: Drehachse
- 24: Drehachse
- 25: Kipparm
- 26: Hinterkante
- 27: Ladeplattformteil (hinten)
- 28: Ladeplattformteil (vorn)
- 29: Fahrtrichtung
- 30: Scharnierachse
- 31: Schwenkarm
- 32: Drehachse
- 33: Rolle
- 34: Kolbenstange
- 35: Bolzen
- 36: Langloch

## Patentansprüche

1. Hubladebühne zur Anordnung im rückwärtigen Bereich eines Fahrzeugs, mit einer vorzugsweise aus zusammenklappbaren Ladeplattformteilen (27, 28) gebildeten Ladeplattform (13) und einem die Ladeplattform (13) tragenden Hubwerk (14), das Betätigungsorgane zum Heben, Senken und/oder Verändern der Neigung der Ladeplattform (13) aufweist, wobei die Ladeplattform (13) gegenüber dem Hubwerk (14) zwischen einer Ruhestellung und einer Gebrauchsstellung bewegbar ist, **dadurch gekennzeichnet, dass** der Ladeplattform (13) mindestens ein Schwenkmittel zugeordnet ist, das von wenigstens einem der Betätigungsorgane des Hubwerks (14) verschwenkbar ist.

2. Hubladebühne nach Anspruch 1, **dadurch gekennzeichnet, dass** das Schwenkmittel zusätzlich von einem Parallelogrammlenker (21) des Hubwerks (14) betätigbar ist.

3. Hubladebühne nach Anspruch 1 oder 2, **dadurch gekennzeichnet, dass** das Schwenkmittel mindestens zum Aufrichten der Ladeplattform (13) aus der etwa horizontalen (flachliegenden) Ruhestellung, vorzugsweise auch zum Zurückbewegen der aufgerichteten Ladeplattform (13) in die Ruhestellung ausgebildet ist.

4. Hubladebühne nach einem der vorhergehenden Ansprüche, **dadurch gekennzeichnet, dass** das Schwenkmittel als mindestens ein Schwenkarm (31) ausgebildet ist.

5. Hubladebühne nach Anspruch 4, **dadurch gekennzeichnet, dass** ein Ende des Schwenkarms (31) drehbar am Hubwerk (14), vorzugsweise an einer Hubschwinge (19) des Hubwerks (14) gelagert ist.

6. Hubladebühne nach Anspruch 4 oder 5, **dadurch gekennzeichnet, dass** ein freies Ende des Schwenkarms (31) zur Anlage unter der sich in der Ruhestellung befindlichen Ladeplattform (13) ausgebildet ist.

7. Hubladebühne nach einem der Ansprüche 4 bis 6, **dadurch gekennzeichnet, dass** der Schwenkarm (31) zwischen seinen gegenüberliegenden Enden wenigstens mit dem Betätigungsorgan des Hubwerks (14), vorzugsweise einem Kippzylinder (20) des Hubwerks (14), verbunden ist.

8. Hubladebühne nach Anspruch 7, **dadurch gekennzeichnet, dass** der Schwenkarm (31) zusätzlich mit einem Parallelogrammlenker (21) des Hubwerks (14) verbunden ist.

9. Hubladebühne nach Anspruch 7 und/oder 8, **dadurch gekennzeichnet, dass** der Kippzylinder (20) und/oder der Parallelogrammlenker (21) über ein an dem Schwenkarm (31) angreifendes Mitnehmerorgan an den Schwenkarm (31) angekoppelt sind, vorzugsweise das Mitnehmerorgan längsverschieblich an den Schwenkarm (31) angreift bzw. in den Schwenkarm (31) eingreift.

10. Hubladebühne nach Anspruch 8, **dadurch gekennzeichnet, dass** der Parallelogrammlenker (21) mit einem Ende einer Kolbenstange (34) des Kippzylinders (20) verbunden ist und an der Stelle dieser Verbindung das Mitnehmerorgan für den Schwenkarm (31) angeordnet ist.

11. Hubladebühne nach Anspruch 9 und/oder 10, **dadurch gekennzeichnet, dass** das Mitnehmerorgan als ein seitlich gegenüber dem Parallelogrammlenker (21) und/ oder dem Ende der Kolbenstange (34) des Kippzylinders (20) vorstehender Bolzen (35) ausgebildet ist, wobei vorzugsweise dieser Bolzen (35) zur längsverschieblichen Verbindung des Kippzylinders (20) und/oder des Parallelogrammlenkers (21) mit dem Schwenkarm (31) in ein Langloch (36) im Schwenkarm (31) eingreift.
